# EUROPEAN PATENT SPECIFICATION

(11) **EP 4 705 678 B1**
(45) Date of publication and mention of the grant of the patent: **28.10.2026**
(21) Application number: 24720182.5
(22) Date of filing: 18.04.2024
(51) Int. Cl.: F21S 8/02, F21V 19/00, F21V 19/04, F21V 23/00, F16F 1/04, F16F 1/14, F21Y 115/10

(54) **LUMINAIRE AND METHOD FOR MAINTENANCE OF A LUMINAIRE**
LEUCHTE UND VERFAHREN ZUR WARTUNG EINER LEUCHTE
LUMINAIRE ET PROCÉDÉ DE MAINTENANCE D'UN LUMINAIRE

(30) Priority: 04.05.2023 EP 23171493; 04.05.2023 EP 23171566
(43) Date of publication of application: 11.03.2026
(73) Proprietor: Signify Holding B.V., 5656 AE Eindhoven (NL)
(72) Inventor: BUKKEMS, Peter, Johannes, Martinus, 5656 AE Eindhoven (NL); VAN HEES, Ger, 5656 AE Eindhoven (NL)
(74) Representative: Verweij, Petronella Daniëlle
(86) International application number: PCT/EP2024/060550
(87) International publication number: WO 2024/227621

(56) References cited:
- EP-A1- 2 884 161
- JP-A- 2014 232 713
- JP-A- H06 309 912
- US-B2- 10 605 978

## Description

### FIELD OF THE INVENTION

The present invention generally relates to luminaires comprising one or more light modules. More specifically, the present invention is related to a luminaire comprising one or more releasably attachable light modules.

### BACKGROUND OF THE INVENTION

There is currently a large interest and need for lighting arrangements or luminaires which are convenient in their constructions, as it is desirable to a provide a robust assembly, convenient removal and/or re-installation of parts or components of the lighting arrangements or luminaires. More specifically, recessed lighting arrangements or luminaires, which may be arranged in offices, homes, stores, etc., may comprise multiple light modules attached to a back plate. For lighting devices of this kind, it is desirable that the individual light modules can be easily removed and re-installed, or that an installation or service of one or more components from the front side and/or the back side of the lighting device is facilitated.

It should be noted that the result of conveniently constructed lighting arrangements or luminaires encompasses an increased energy efficiency and sustainability. More specifically, the possibility to repair and upgrade luminaires significantly increases the luminaire sustainability, and a modular design of the luminaires enables an easy replacement of luminaire parts or components thereof.

Prior art lighting arrangements, aiming to provide at least some of the above-mentioned advantages, are often complex and inconvenient in their constructions. Due to these deficiencies, they are consequently not able to achieve the sought energy efficiency and sustainability of the lighting arrangements.

Hence, it is an object of the present invention to provide a lighting arrangement or luminaire which is convenient and non-complex in its structure, which consequently also provides energy efficiency and sustainability.

JP-2014/232713 discloses a lighting fixture that allows a frame to be temporarily suspended by means of springs. Each spring has a central portion that attaches to an inner wall of the frame, and a pair of arm portions that extend from both ends of the central portion. The arm portions can be inserted into holes of a body of the lighting fixture, wherein hook-shaped locking portions provided at the tips of the arm portions lock with a peripheral edge of the hole.

### SUMMARY OF THE INVENTION

It is of interest to provide a lighting arrangement or luminaire which is convenient and non-complex in its construction or structure, resulting in an increased energy efficiency and sustainability of the lighting arrangement or luminaire due to a facilitated assembly, as well as removal, repair and re-installation operations.

This and other objects are achieved by providing a luminaire and a method having the features in the independent claim. Preferred embodiments are defined in the dependent claims.

Hence, according to the first aspect of the present invention, there is provided a luminaire, comprising a luminaire housing, a light module attachable to the luminaire housing, and a torsion spring. The torsion spring comprises a coil and a pair of legs extending from the coil, wherein each leg of the pair of legs comprises a respective end portion distal to the coil. The luminaire housing comprises an opening, and the light module is releasably attachable to the luminaire housing by the torsion spring via the opening. In a detached mode, the torsion spring does not extend through the opening, whereby at least part of the light module is detached from the luminaire housing. In an attached mode, the torsion spring partially extends through the opening. In a first state of the attached mode, the pair of legs of the torsion spring extends through the opening of the luminaire housing, and each leg of the pair of legs abuts a back side of the luminaire housing, whereby the torsion spring biases at least part of the light module towards the luminaire housing. In a second state of the attached mode, the end portion of each leg of the pair of legs abuts the back side of the luminaire housing at a rim of the opening, and the pair of legs of the torsion spring is positioned between the luminaire housing and the light module, whereby the light module is separated from the luminaire housing.

To enable the luminaire to have a reduced installation depth, the coil has a first end portion and a second end portion, each of the first end portion and the second end portion being straight. Each leg of the pair of legs then has a base portion that is connected to a respective one of the first and second end portions of the coil, thereby forming a bent part of the torsion spring, wherein each bent part has an angle in a range of 60 to 110 degrees.

According to the second aspect of the present invention, there is provided a method for maintenance of a luminaire. The luminaire comprises a luminaire housing, a light module attachable to the luminaire housing, and a torsion spring. The torsion spring comprises a coil and a pair of legs extending from the coil, wherein each leg of the pair of legs comprises a respective end portion distal to the coil. The luminaire housing comprises an opening, and the light module is releasably attachable to the luminaire housing by the torsion spring via the opening. The method comprises at least one of the following steps:
(i) obtaining a detached mode by detaching at least part of the light module from the luminaire housing, whereby the torsion spring does not extend through the opening,
(ii) obtaining a first state of an attached mode by arranging the pair of legs of the torsion spring through the opening of the luminaire housing, such that each leg of the pair of legs abuts a back side of the luminaire housing, whereby the torsion spring biases at least part of the light module towards the luminaire housing, and
(iii) obtaining a second state of an attached mode by arranging the end portion of the leg of the pair of legs to abut the back side of the luminaire housing at a rim of the opening, and positioning the pair of legs of the torsion spring between the luminaire housing and the light module, whereby at least part of the light module is separated from the luminaire housing.

Thus, the present invention is based on the idea of a luminaire with one or more light modules which are releasably attachable to the luminaire housing. In a detached mode, at least part of the light module is detached from the luminaire housing. In a first state of the attached mode, at least part of the light module is biased towards the luminaire housing, resulting in a fully closed mode. In a second state of the attached mode, at least a part of the light module, whilst still being attached to the luminaire housing via the coil, is separated from the luminaire housing, representing a partially open mode. The luminaire hereby enables facilitated assembly, removal and re-installation operations, including easy dis- and re-mounting operations, with a minimum use, or even no use, of tools, and with a minimum of parts.

The present invention is advantageous in that its convenience and non-complexity leads to a simplified maintenance, repair, mounting and/or de-mounting of the luminaire. The present invention is consequently advantageous in that the luminaire provides cost- and time efficiency with respect to operations such as maintenance, repair, mounting and de-mounting of the luminaire. Furthermore, as the luminaire is particularly easy and convenient to repair and maintain, it has a longer service life compared to other lighting arrangements in the prior art, thereby even further contributing to the sustainability aspect of the luminaire.

The present invention is further advantageous in its simplicity of operation and handling concerning a minimization of parts and components. For example, the light module of the luminaire may be provided without screws, thereby even further facilitating the handling of the light module.

The present invention is further advantageous in its versatility regarding the different modes that the luminaire can adopt, thereby improving the mode/setting of the luminaire for the desired purpose, such as (normal) luminaire operation of light distribution, repair of the luminaire, etc. It will be appreciated that substantially any combination of the first state of the attached mode, the second state of the attached mode, and the detached mode may be adopted via the torsion spring(s). For example, in case of a detached mode of the present invention, which may represent a "dangling state" of the light module, it should be noted that repair, re-installation and disassembly purposes become particularly convenient and easy. The light module may even be moved sideways when in this state to create even more space for an operator for these purposes.

The present invention is further advantageous regarding safety aspects. More specifically, the construction of the luminaire prevents the light module(s) from falling. In principle, the light module(s) cannot be removed from the luminaire without compression of the tension spring. An overloading of the tension spring results in a bended luminaire or a broken light module, meaning that the tension spring may be stronger compared to other luminaire components.

The present invention is further advantageous in that the convenience of the luminaire implies a cost-efficient arrangement as such, e.g. concerning the bill of materials.

It will be appreciated that the luminaire of the present invention comprises relatively few components. The relatively low number of components is advantageous in that the luminaire is relatively inexpensive to fabricate, and that its production may be conducted in a more environmentally friendly manner compared to prior art products. Moreover, the relatively low number of components of the luminaire implies an easier recycling, especially compared to devices or arrangements comprising a relatively high number of components which impede an easy disassembling and recycling operation.

The luminaire comprises a luminaire housing, wherein the luminaire housing may be a frame element, a plate element, a back plate, or the like. The luminaire further comprises a light module attachable to the luminaire housing. By "light module", it is here meant substantially any lighting device, arrangement or the like, comprising one or more light sources and/or optical means such as lenses, or the like. The luminaire further comprises a torsion spring. The torsion spring comprises a coil and a pair of legs extending from the coil. Hence, the torsion spring may be biased by application of force(s) on the pair of legs. Each leg of the pair of legs comprises a respective end portion distal to the coil. The luminaire housing comprises an opening. By "opening", it is here meant a (through) hole, a slit, or the like. The light module is releasably attachable to the luminaire housing by the torsion spring via the opening, i.e. that the light module may be (mechanically) attached to, and detached from, the luminaire housing. In a detached mode, the torsion spring does not extend through the opening, whereby at least part of the light module is detached from the luminaire housing. In an attached mode, the torsion spring partially extends through the opening. Hence, the light module and the luminaire housing are attached via the torsion spring extending through the opening. In a first state of the attached mode, the pair of legs of the torsion spring extends through the opening of the luminaire housing, and each leg of the pair of legs abuts a back side of the luminaire housing, whereby the torsion spring biases at least part of the light module towards the luminaire housing. Hence, the pair of legs of the torsion spring forces or pushes (at least part of) the light module towards the luminaire housing, or, in other words, pulls the light module towards the luminaire housing. In a second state of the attached mode, the end portion of each leg of the pair of legs abuts the back side of the luminaire housing at a rim of the opening, and the pair of legs of the torsion spring is positioned between the luminaire housing and the light module, whereby at least part of the light module is separated from the luminaire housing. Hence, the second state of the attached mode may represent a "dangling state", wherein the separation of (at least part of) the light module and the luminaire housing may be dependent on the length of the pair of legs of the torsion spring.

According to an embodiment of the present invention, the torsion spring may be fastened to the light module. Hence, the torsion spring may be attached to the light module. The present embodiment is advantageous in that the handling of the luminaire may be facilitated by the torsion spring(s) being fastened or attached to the light module, thereby avoiding or at least minimizing the occurrence of separate parts of the luminaire. According to an alternative example, the torsion spring may be fastened to the luminaire housing, which also facilitates the handling of the luminaire and avoids or at least minimizes the occurrence of separate parts of the luminaire.

According to an embodiment of the present invention, a first distance, d, between at least part of the light module and the luminaire housing, in the first state of the attached mode, and a second distance, D, between at least part of the light module and the luminaire housing, in the second state of the attached mode, fulfill D > d. Hence, in the second state of the attached mode, there is a larger separation between the light module and the luminaire housing compared to the first state of the attached mode. The present embodiment is advantageous concerning the versatility associated with the purpose of the luminaire. For example, in case of a (current) purpose of the luminaire to operate normally for light distribution, the luminaire may adopt the first state of the attached mode, wherein (at least part of) the light module and the luminaire housing are closely attached. According to another example, in case of a (current) purpose of the luminaire to be repaired, maintained, or the like, the luminaire may adopt the second state of the attached mode, wherein (at least part of) the light module and the luminaire housing are separated for a facilitated repair or maintenance operation.

According to an embodiment of the present invention, the opening may be slit-shaped. The present embodiment is advantageous in that the relatively narrow, slit-shaped opening may align the pair of legs of the torsion spring in the first stage of the attached mode, thereby contributing to the stability of the luminaire.

According to an embodiment of the present invention, wherein, in the first stage of the attached mode, the legs of the pair of legs of the torsion spring may extend in opposite directions along the back side of the luminaire housing. The present embodiment is advantageous in that the configuration of the legs of the pair of legs of the torsion spring contributes to the stability of the luminaire in the first stage of the attached mode.

According to an embodiment of the present invention, a first portion of each leg of the pair of legs adjacent the end portion may extend along a first axis, A, and the end portion of each leg of the pair of legs is inclined with respect to the first axis, A, by an angle, γ, wherein γ > 80°. The present embodiment is advantageous in that the inclined/bent first portion(s) may provide a particularly firm grip of the torsion spring at the rim of the opening of the luminaire housing in the second state of the attached mode.

According to an embodiment of the present invention, the end portion of each leg of the pair of legs may be loop-shaped. By "loop-shaped", it is here meant that the end portions are curled, rounded, bent, inclined, or the like. The present embodiment is advantageous in that a manual handling of the torsion spring becomes more user friendly and safer. The present embodiment is further advantageous in that the loop-shape counteracts the risk of injury of an operator handling the torsion spring. The present embodiment is further advantageous in that it creates a horizontal edge for fall-out protection. The present embodiment is further advantageous in that the loop-shaped end portions provide one or more areas of support and/or abuttal at the rim of the opening in the second stage of the attached mode, thereby contributing to the stability of the luminaire in the second stage of the attached mode.

According to an embodiment of the present invention, a second axis, B, extends from a base portion of each leg of the pair of legs, at the coil, to the end portion, and wherein a portion of each leg extends in a respective direction, Lᵢ, wherein the respective direction, Lᵢ, deviates from the second axis, B, by a respective angle, αᵢ. Hence, one or more portion(s) of each leg deviates from a reference (straight) second axis, B, by the respective direction(s), Lᵢ. In other words, one or more portions of the leg(s) of the torsion spring are inclined or bent. The present embodiment is advantageous regarding numerous aspects. For example, by the provision of inclined/bent leg portion(s), the torsion spring is particularly suitable for providing advantages in the first state and the second state of the attached mode. More specifically, a (first) inclined/bent leg portion approximately at the center of each leg of the pair of legs leads to an increased force of pulling the light module and the luminaire housing towards each other, thereby augmenting the stability and robustness in the first state of the attached mode. Furthermore, a (second) inclined/bent leg portion adjacent to (in the vicinity of) the end portion(s) facilitates the keeping of the torsion spring in the second state of the attached mode. In other words, the leg(s) is (are) exerting a force to the luminaire housing that has a relatively low, or even no (vertical) component pointing (upwards) towards the luminaire housing. A relatively small (vertical) component can be cancelled by friction inside the luminaire. Hence, in the second state of the attached mode, the torsion spring leg position is such that it does not lead to any tendency for the light module to snap back into the first state of the attached position. Furthermore, a (third) inclined/bent leg portion, adjacent to the (first) inclined/bent portion, reduces the disassembly force to get enough space to pull the light module into the second state of the attached mode.

According to an example of the present invention, each leg of the pair of legs of the torsion spring may be inclined at the coil. The angle of this inclined/bent part of the leg(s) is defined by the force needed for the luminaire assembly. The present example is beneficial in order to keep mechanical loads relatively small inside luminaire (plastic) components and still have enough space to compensate for any tolerances like thermal expansion and product deviations of the luminaire components.

According to an embodiment of the present invention, the luminaire may comprise a single torsion spring. The present embodiment is advantageous in that the luminaire may provide the advantages of the present invention whilst minimizing the number of torsion springs, leading to an even more convenient and less complex luminaire.

According to an embodiment of the present invention, the luminaire may comprise two torsion springs. The present embodiment is advantageous in that the luminaire may adopt the first state of the attached mode, the second state of the attached mode, or the detached mode, via a first torsion spring, and adopt the first state of the attached mode, the second state of the attached mode, or the detached mode, via the second torsion spring. The present embodiment is particularly advantageous in case the luminaire adopts the second state of the attached mode via the first torsion spring and adopts the detached mode via the second torsion spring, whereby the light module luminaire becomes suspended in a "dangling" state, facilitating the access of the luminaire and facilitating any repair, replacement, etc., of luminaire components.

According to an embodiment of the present invention, the luminaire may further comprise a driver arranged to supply electrical power to the light module. The luminaire housing may comprise a cavity arranged to accommodate the driver, wherein the light module is arranged to cover the cavity, and wherein, in the detached mode, the cavity is accessible from a front side of the luminaire. Hence, the luminaire may further comprise a driver arranged to supply electrical power to the light module, wherein the light module may comprise one or more light sources such as one or more light emitting diodes (LEDs). The present embodiment is advantageous in that the light module provides a convenient and easy access to the driver for a replacement, repair, etc., of the driver. Furthermore, it should be noted that the use of LEDs for illumination purposes is advantageous concerning many aspects. Compared to incandescent lamps, fluorescent lamps, neon tube lamps, etc., LEDs provide numerous advantages such as a longer operational life, a reduced power consumption, and an increased efficiency related to the ratio between light energy and heat energy.

According to an embodiment of the present invention, there is provided a luminaire arrangement. The luminaire arrangement may comprise at least one of a wall and a ceiling, comprising a recess, and the luminaire according to any one of the preceding claims, arranged in the recess. It should be noted that the luminaire may be provided in any kind of lighting arrangement such as a suspended lamp, floor lamp, etc., but that that the luminaire arrangement with the luminaire arranged in a wall and/or ceiling recess constitutes a particularly advantageous embodiment.

According to an embodiment of the second aspect of the present invention, the method may further comprise obtaining the second state of the attached mode from the first state of the attached mode by separating the light module from the luminaire housing by a tool. The present embodiment is advantageous in that the separation of the light module from the luminaire housing via the tool is particularly easy and convenient.

According to an embodiment of the second aspect of the present invention, the step of obtaining the detached mode may further comprise detaching the light module from the luminaire housing from one of the first state of the attached mode and the second state of the attached mode by pushing the legs of the pair of legs towards each other, and bringing the pair of legs through the respective opening. Hence, the light module may be detached either from the first state or the second state by pushing the legs of the pair of legs towards each other, and bringing the pair of legs through the respective opening. The present embodiment is advantageous in that the method provides a particularly convenient way of detaching the light module from the luminaire housing.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1 schematically shows a luminaire according to an exemplifying embodiment of the present invention,
Fig. 2 schematically shows a light module of a luminaire according to an exemplifying embodiment of the present invention,
Fig. 3 schematically shows a torsion spring of a luminaire according to an exemplifying embodiment of the present invention,
Figs. 4a and 4b schematically show cross-sections of a luminaire according to an exemplifying embodiment of the present invention,
Fig. 5 schematically shows a luminaire according to an exemplifying embodiment of the present invention,
Figs. 6A and 6B schematically show a torsion springs according to exemplifying embodiments of the present invention,
Fig. 7 schematically show a torsion springs according to an exemplifying embodiment of the present invention,
Fig. 8 schematically shows a luminaire according to an exemplifying embodiment of the present invention, and
Fig. 9 schematically shows a flow chart of a method according to an exemplifying embodiment of the second aspect of the present invention.

### DETAILED DESCRIPTION

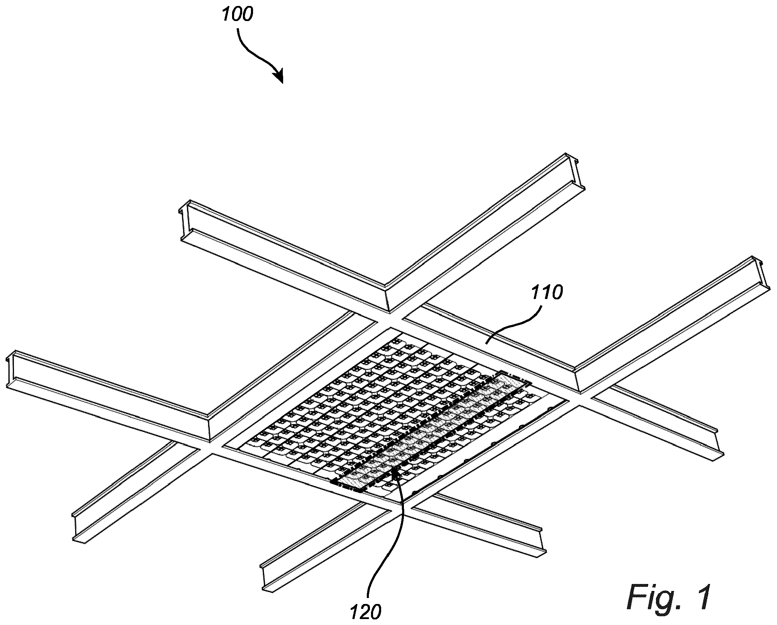

Fig. 1 schematically shows a luminaire 100 according to an exemplifying embodiment of the present invention. The luminaire 100 comprises a luminaire housing 110. The luminaire housing 110 may be a frame element, a plate element, a back plate, or the like. The luminaire 100 further comprises at least one light module 120 attachable to the luminaire housing 110. The light module 120 may be a lighting device, arrangement or the like, comprising one or more light sources and/or optical means such as lenses, or the like. For example, the light module 120 may comprise a plurality of light emitting diodes, LEDs. The luminaire 100 as exemplified in Fig. 1 may be arranged in a recess of a wall and/or a ceiling.

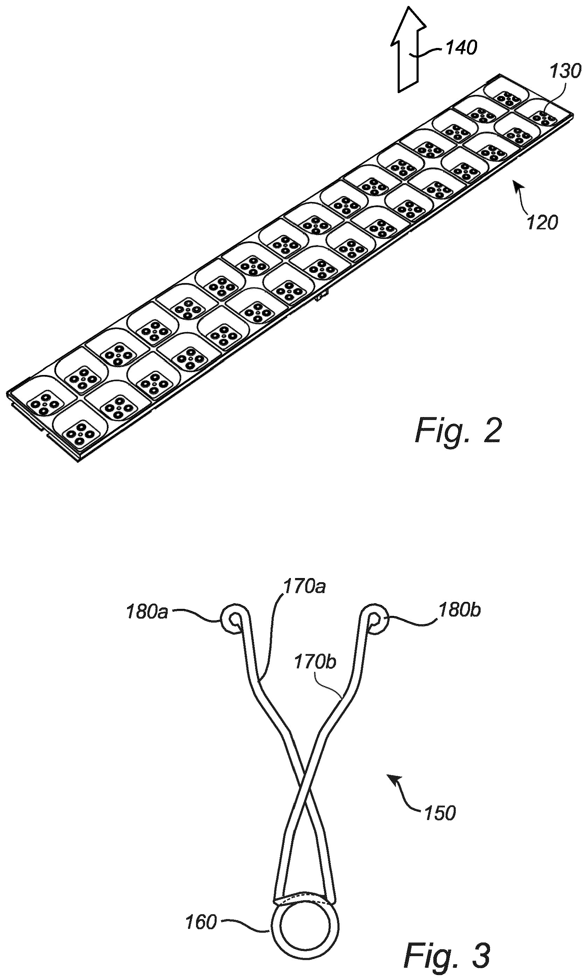

Fig. 2 schematically shows a light module 120 of a luminaire 100 according to an exemplifying embodiment of the present invention. Here, the light module 120 is exemplified as comprising 2 x 16 reflectors, each partially enclosing 4 LEDs 130 (i.e. 128 LEDs 130 in total) arranged to emit light 140. It will be appreciated that the light module 120 may comprise substantially any number of rows and columns of reflectors, and any number of LEDs 130.

Fig. 3 schematically shows a torsion spring 150 of a luminaire according to an exemplifying embodiment of the present invention. The torsion spring 150, which may be manufactured from wire, comprises a coil 160 and a pair of legs 170a, 170b extending from the coil 160. Each leg of the pair of legs 170a, 170b comprises a respective end portion 180a, 180b distal to the coil 160. The coil 160 may comprise e.g. 3-6 loops (of wire). The end portions 180a, 180 of the torsion spring 150 as exemplified are bent (loop-shaped).

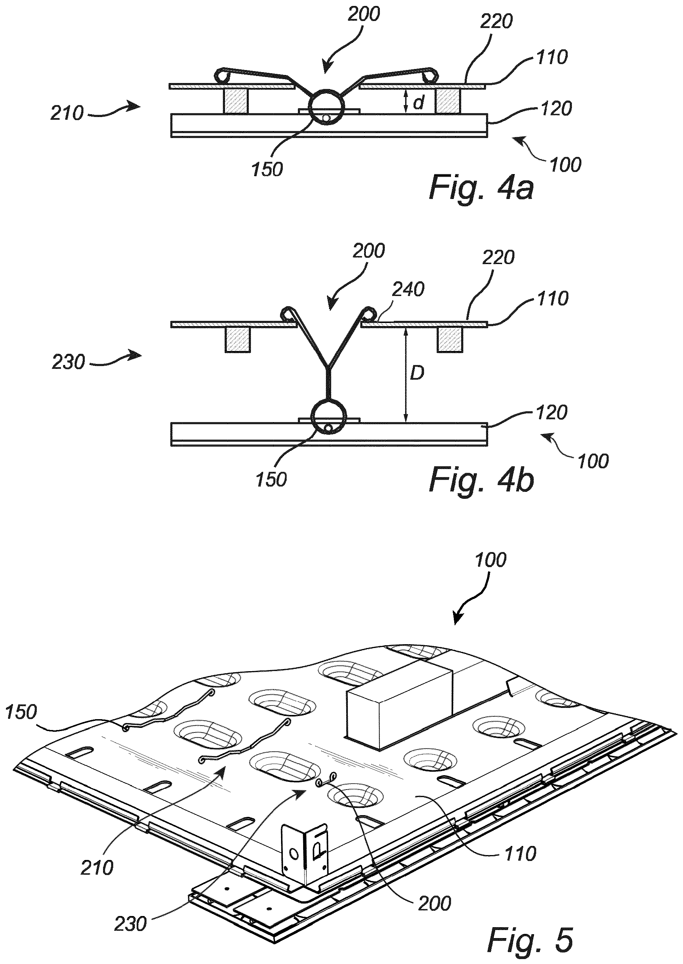

Figs. 4a and 4b schematically show cross-sections of a luminaire 100 according to an exemplifying embodiment of the present invention. The luminaire housing 110 comprises an opening 200, in form of a (through) hole, a slit, or the like. The light module 120 is releasably attachable to the luminaire housing 110 by the torsion spring 150 via the opening 200, i.e. that the light module 120 may be (mechanically) attached to, and detached from, the luminaire housing 110. In an attached mode, as shown by both Figs. 4a and 4b, the torsion spring 150 (partially) extends through the opening 200, whereby the light module 120 and the luminaire housing 110 are attached via the torsion spring 150 extending through the opening 200. In a detached mode (not shown), the torsion spring 150 does not extend through the opening 200, whereby at least part of the light module 120 is detached from the luminaire housing 110.

Fig. 4a schematically shows a cross-section of a luminaire 100 in a first state 210 of an attached mode according to an exemplifying embodiment of the present invention. The pair of legs of the torsion spring 150 extends through the opening 200 of the luminaire housing 110, and each leg of the pair of legs abuts a back side 220 of the luminaire housing 110, whereby the torsion spring 150 biases at least part of the light module 120 towards the luminaire housing 110. Hence, the pair of legs of the torsion spring 150 forces or pushes (at least part of) the light module 120 towards the luminaire housing 110. This results in a (relatively short) distance, d, between (at least part of) the light module 120 and the luminaire housing 110.

Fig. 4b schematically shows a cross-section of a luminaire 100 in a second state 230 of an attached mode according to an exemplifying embodiment of the present invention. In the second state 230 of the attached mode, the end portion of each leg of the pair of legs abuts the back side 220 of the luminaire housing 110 at a rim 240 of the opening 200. The pair of legs of the torsion spring 150 is positioned between the luminaire housing 110 and the light module 120, whereby at least part of the light module 120 is separated from the luminaire housing 110. This results in a (relatively large) distance, D, between (at least part of) the light module 120 and the luminaire housing 110. The second state 230 of the attached mode represents a "dangling state" by the separation of (at least part of) the light module 120 and the luminaire housing 110.

Fig. 5 schematically shows a luminaire 100 according to an exemplifying embodiment of the present invention, wherein the view of the luminaire 100 is from its back side. In this example, the luminaire 100 comprises a plurality of openings 200 in the luminaire housing 120, and the luminaire 100 comprises a plurality of torsion springs 150. According to this example of the luminaire 100 as shown, it adopts an attached mode, as the pairs of legs of the torsion springs 150 extend through the respective opening 200 of the luminaire housing 110. In a first state 210 of the attached mode, each leg of the pairs of legs abuts a back side of the luminaire housing 110, whereby the torsion spring 150 biases at least part of the light module 120 towards the luminaire housing 110. In second state 230 of the attached mode, the end portion(s) of the pair of legs abut(s) the back side of the luminaire housing 110 at a rim of the housing, separating the light module and the luminaire housing 110.

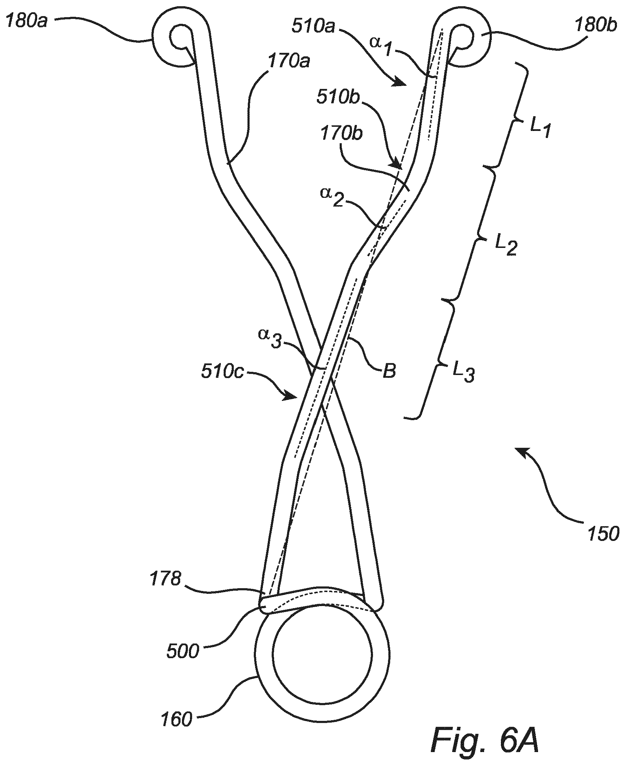

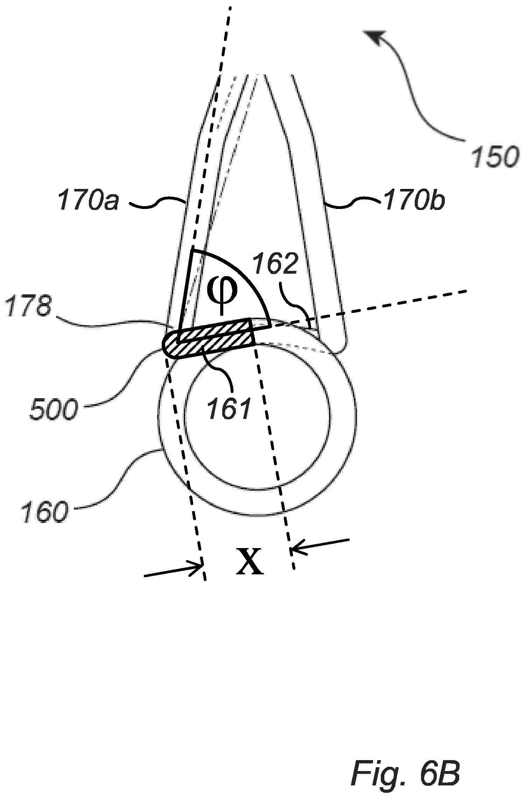

Fig. 6A schematically shows a torsion spring 150 according to an exemplifying embodiment of the present invention. The torsion spring 150 has a specific shape or configuration in order to facilitate the positioning of the torsion spring 150 in the first and second states of the attached mode. A second axis, B, extends from a base portion 500 of each leg of the pair of legs 170a, 170b, at the coil 160, to the end portion 180a, 180b of the torsion spring 150. A plurality of portions 510a-c of each leg extend in a respective direction, Lᵢ, wherein the respective direction, Lᵢ, deviates from the second axis, B, by a respective angle, αᵢ. For example, and as indicated in Fig. 6, a (first) portion 510a of the torsion spring 150 extending from the end portion 180a, 180b towards the coil 160 extends in direction, L₁, which deviates from the second axis, B, by an angle, α₁. The angle, α₁, is positive with respect to the second axis, B, in a counterclockwise direction. The inclined/bent leg portion 510a facilitates the keeping of the torsion spring 150 in the second state of the attached mode. A (second) portion 510b of the torsion spring 150 extending from the (first) portion 510a towards the coil 160 extends in direction, L₂, which deviates from the second axis, B, by an angle, α₂. The angle, α₂, is negative with respect to the second axis, B, in a counterclockwise direction. The inclined/bent leg portion 510b, which is provided approximately at the center of each leg of the pair of legs 170a, 170b of the torsion spring 150 leads to an increased force of pulling the light module and the luminaire housing towards each other, thereby augmenting the stability and robustness in the first state of the attached mode. A (third) portion 510c of the torsion spring 150 extending from the (second) portion 510b towards the coil 160 extends in direction, L₃, which deviates from the second axis, B, by an angle, α₃. The angle, α₃, is positive with respect to the second axis, B, in a counterclockwise direction. The inclined/bent leg portion 510c reduces the disassembly force to get enough space to pull the light module into the second state of the attached mode.

Fig. 6B shows an enlargement of a part of the torsion spring 150 of Fig. 6A.

Here it is shown that the coil 160 has a first end portion 161 and a second end portion 162. In the view of Fig. 6B, the first end portion 161 is visible at the front of the coil 160, and it is indicated with a hatched area. The second end portion 161 is at the back of the coil 160.

As is true for any torsion spring having a coil, when viewed in a direction along an axis of the coil, the first and second end portions are at the same side of the coil (in the view of Fig. 6B, they are both at the top side of the coil 160).

Each of the first end portion 161 and the second end portion 162 is straight and has a length x.

The base portion 500 of the leg 170a is connected to the first end portion 161, and the base portion of the leg 170b is connected to the second end portion 162. In other words, each leg of the pair of legs 170a, 170b has a base portion 500 that is connected to a respective one of the first and second end portions 161, 162.

At the base portion 500, each leg of the pair of legs 170a, 170b is connected to the coil 160 such that it extends away from the coil 160 under an angle φ relative to the respective end portion 161, 162. The angle φ is in a range of 60 to 110 degrees, preferably in a range of 70 to 90 degrees.

In other words, at the base portion 500 of each leg of the pair of legs 170a, 170b, the torsion spring 150 may comprise a (sharp) inclined or bent part 178. Or, at each transition from a leg of the pair of legs 170a, 170b to the coil 160, the torsion spring 150 has an inclined or bent part 178.

The angle of this inclined/bent part 178 of the leg(s) has a value φ in a range of 60 to 110 degrees, preferably in a range of 70 to 90 degrees. This angle is defined by the force needed for the luminaire assembly. The inclined/bent part 178 of the leg(s) is beneficial in order to keep mechanical loads relatively small inside luminaire (plastic) components and still have enough space to compensate for any tolerances like thermal expansion and product deviations of the luminaire components.

The construction of the torsion spring 150 as shown in Figs. 6A and 6B, with each leg of the pair of legs 170a, 170b being connected to the coil 160 through an inclined or bent part 178 having an angle in a range of 60 to 110 degrees, allows the luminaire to have a reduced installation depth.

This is because in the first state of the attached mode, wherein the coil 160 and the pair of legs 170a, 170b are on opposite sides of an opening of the luminaire housing, the legs 170a and 170b can be oriented substantially parallel to the back side of the luminaire housing, wherein the end portions 180a and 180b of the legs 170a and 170b, respectively, abut the back side of the luminaire housing. In the absence of the inclined or bent parts 178, this would not be possible and instead the legs would extend in a direction away from the opening. By being able to let the legs 170a and 170b lie substantially flat against the back side of the luminaire, less space is required to accommodate the legs 170a and 170b in the first state of the attached mode, which in turn enables the luminaire to have a reduced installation depth.

For example, the construction of the torsion spring 150 as shown in Figs. 6A and 6B enables a luminaire with an installation depth of not more that 50 millimeters, which falls within the freely available installation space for offices having a standard dropped ceiling with a T-grid construction.

As said, each of the first end portion 161 and the second end portion 162 of the coil 160 is straight and has a length x. In the first state of the attached mode, these straight end portions extend though the opening in the luminaire housing.

Preferably, the first and second end portions 161 and 162 have a length x that is more than the thickness of the luminaire housing, and the inclined or bent parts 178 have an angle in a range of 70 to less than 90 degrees. In the first state of the attached mode, the base portions 500 of the legs 170a and 170b would then be located at a non-zero distance away from the back side, and the legs 170a and 170b would be oriented back towards the back side, thereby enabling the torsion spring 150 to bias at least part of the light module towards the luminaire housing in a more stable and secure way.

While the first and second end portions 161 and 162 preferably have a length x that is more than the thickness of the luminaire housing, the length x is preferably not too much larger than the thickness of the luminaire housing, as this would go at the expense of the installation depth.

Hence, the ratio of (i) the length of the first and second end portions 161 and 162 of the torsion spring 150, and (ii) the thickness of the luminaire housing may be larger than 1 but not more than 10, and preferable it is larger than 1 but not more than 2.

For similar reasons, the ratio of (i) the length of the first and second end portions 161 and 162 of the torsion spring 150, and (ii) the diameter of the coil 160 may be equal to or less than 1, such as in a range of 0.4 to 0.6.

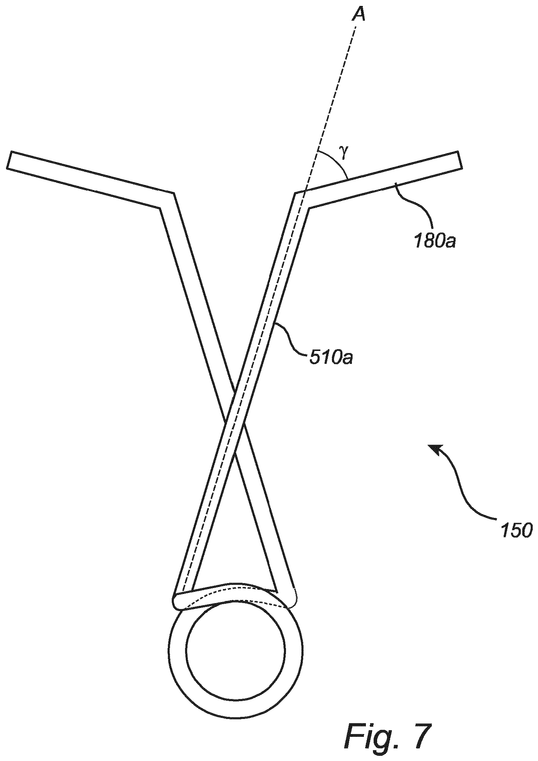

Fig. 7 schematically shows a torsion spring 150 according to an exemplifying embodiment of the present invention. A first portion 510a of each leg of the pair of legs adjacent the end portion extends along a first axis, A, and the end portion of each leg of the pair of legs is inclined with respect to the first axis, A, by an angle, γ, wherein γ > 80°. The embodiment may provide a particularly firm grip of the torsion spring 150 at the rim of the opening of the luminaire housing in the second state of the attached mode.

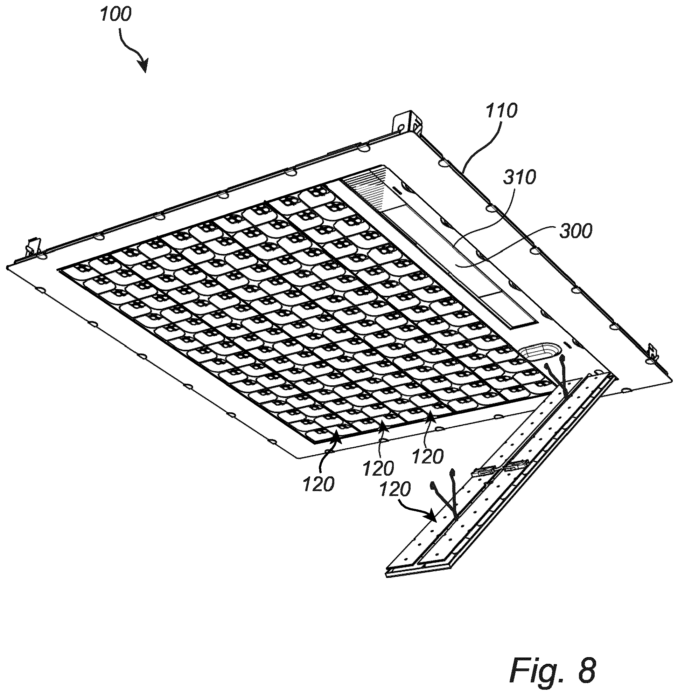

Fig. 8 schematically shows a luminaire 100 according to an exemplifying embodiment of the present invention. The luminaire 100 comprises a plurality of light modules 120. One of the light modules 120 is shown in the detached mode, i.e. that the light module 120 is separated from the luminaire housing 110 of the luminaire 100. The other light modules 120 adopt the first state of the attached mode, whereby the light modules 120 abut the luminaire housing 110 or are arranged in a close vicinity of the luminaire housing 110. The luminaire 100 as exemplified in Fig. 8 comprises a driver 300 arranged to supply electrical power to the light module 120. The luminaire housing 110 comprises an accommodation 310 (e.g. a cavity) arranged to accommodate the driver 300. The light module 120 is arranged to cover the accommodation 310 in the attached mode, whereas in the detached mode, the accommodation 310 is accessible from a front side of the luminaire 100.

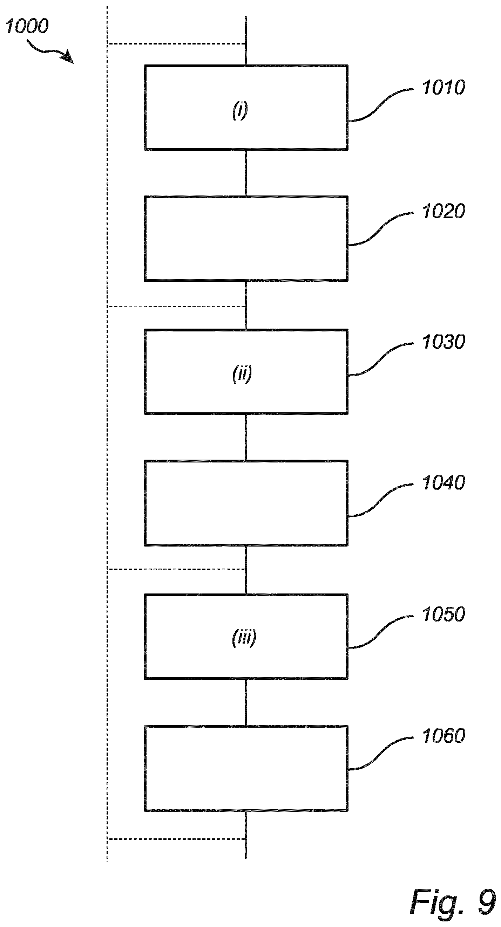

Fig. 9 schematically shows a flow chart of a method 1000 according to an exemplifying embodiment of the second aspect of the present invention. The method 1000 relates to maintenance of a luminaire according to the first aspect of the present invention, and it is referred to the previous figure(s) and associated text for details and understanding of the features and functions of the luminaire. The method 1000 comprises at least one of the following steps:
(i) obtaining 1010 a detached mode by detaching 1020 at least part of the light module from the luminaire housing, whereby the torsion spring does not extend through the opening,
(ii) obtaining 1030 a first state of an attached mode by arranging 1040 the pair of legs of the torsion spring through the opening of the luminaire housing, such that each leg of the pair of legs abuts a back side of the luminaire housing, whereby the torsion spring biases at least part of the light module towards the luminaire housing, and
(iii) obtaining 1050 a second state of an attached mode by arranging 1060 the end portion of the leg of the pair of legs to abut the back side of the luminaire housing at a rim of the opening, and positioning the pair of legs of the torsion spring between the luminaire housing and the light module, whereby at least part of the light module is separated from the luminaire housing.

Hence, the method 1000 may comprise any one, or any combination of, the step (i), (ii) and (iii), as indicated by the dashed lines. For example, the method 1000 may comprise (ii) obtaining 1030 the first state of the attached mode, followed by (iii) obtaining 1050 the second state of the attached mode, followed by (i) obtaining 1010 the detached mode, i.e. detaching 1020 at least part of the light module from the luminaire housing.

The person skilled in the art realizes that the present invention by no means is limited to the preferred embodiments described above. On the contrary, many modifications and variations are possible within the scope of the appended claims. For example, one or more of the light module 120, the torsion spring 150, etc., may have different shapes, dimensions and/or sizes than those depicted/described.

## Claims

1. A luminaire (100), comprising:
- a luminaire housing (110),
- a light module (120) attachable to the luminaire housing, and
- a torsion spring (150),
wherein the torsion spring (150) comprises a coil (160) and a pair of legs (170a, 170b) extending away from the coil (160),
wherein each leg of the pair of legs (170a, 170b) comprises a respective end portion (180a, 180b) distal to the coil (160),
wherein the luminaire housing (110) comprises an opening (200), and wherein the light module (120) is releasably attachable to the luminaire housing (110) by the torsion spring (150) via the opening (200),
wherein, in a detached mode, the torsion spring (150) does not extend through the opening (200), whereby at least part of the light module (120) is detached from the luminaire housing (110),
wherein, in an attached mode, the torsion spring (150) partially extends through the opening (200),
wherein, in a first state (210) of the attached mode, the pair of legs (170a, 170b) of the torsion spring (150) extends through the opening (200) of the luminaire housing (110), and each leg of the pair of legs (170a, 170b) abuts a back side (220) of the luminaire housing (110), whereby the torsion spring (150) biases at least part of the light module (120) towards the luminaire housing (110),
wherein, in a second state (230) of the attached mode, the end portion of each leg of the pair of legs abuts the back side of the luminaire housing at a rim (240) of the opening, and the pair of legs (170a, 170b) of the torsion spring (150) is positioned between the luminaire housing (110) and the light module (120), whereby at least part of the light module (120) is separated from the luminaire housing (110),
wherein the coil (160) has a first end portion (161) and a second end portion (162), each of the first end portion (161) and the second end portion (162) being straight, and
wherein each leg of the pair of legs (170a, 170b) has a base portion (500) that is connected to a respective one of the first end portion (161) and the second end portion (162), thereby forming a bent part (178) of the torsion spring (150),
**characterized in that** each bent part (178) has an angle in a range of 60 to 110 degrees.

2. The luminaire (100) according to claim 1, wherein the torsion spring (150) is fastened to the light module (120).

3. The luminaire (100) according to claim 1 or 2, wherein
a first distance, d, between at least part of the light module (120) and the luminaire housing (110), in the first state of the attached mode, and
a second distance, D, between at least part of the light module (120) and the luminaire housing (110), in the second state of the attached mode,
fulfill D > d.

4. The luminaire (100) according to any one of the preceding claims, wherein the opening (200) is slit-shaped.

5. The luminaire (100) according to any one of the preceding claims, wherein, in the first stage of the attached mode, the legs of the pair of legs (170a, 170b) of the torsion spring (150) extend in opposite directions along the back side (220) of the luminaire housing (110).

6. The luminaire (100) according to any one of the preceding claims, wherein a first portion (510a) of each leg of the pair of legs (170a, 170b) adjacent the respective end portion (180a, 180b) extends along a first axis, A, and the respective end portion (180a, 180b) of each leg of the pair of legs (180a, 180b) is inclined with respect to the first axis, A, by an angle, γ, wherein γ > 80°.

7. The luminaire (100) according to any one of the preceding claims, wherein the respective end portion (180a, 180b) of each leg of the pair of legs (170a, 170b) is loop-shaped.

8. The luminaire (100) according to any one of the preceding claims, wherein a second axis, B, extends from the base portion (500) of each leg of the pair of legs (170a, 170b), at the coil (160), to the respective end portion (180a, 180b), and wherein a portion (510) of each leg (170a, 170b) extends in a respective direction, Lᵢ, wherein the respective direction, Lᵢ, deviates from the second axis, B, by a respective angle, αᵢ.

9. The luminaire (100) according to any one of claims 1 to 8, comprising a single torsion spring (150).

10. The luminaire (100) according to any one of claims 1 to 8, comprising two torsion springs (150a, 150b).

11. The luminaire (100) according to any one of the preceding claims, further comprising:
a driver (300) arranged to supply electrical power to the light module (120),
wherein the luminaire housing (110) comprises a cavity (310) arranged to accommodate the driver (300), wherein the light module (120) is arranged to cover the cavity (310), and
wherein, in the detached mode, the cavity (310) is accessible from a front side of the luminaire (100).

12. A luminaire arrangement, comprising:
at least one of a wall and a ceiling, comprising a recess, and
the luminaire (100) according to any one of the preceding claims, arranged in the recess.

13. A method (1000) for maintenance of the luminaire (100) according to any one of claims 1 to 11, wherein the method comprises at least one of the following steps:
(i) obtaining (1010) a detached mode by detaching (1020) at least part of the light module (120) from the luminaire housing (110), whereby the torsion spring (150) does not extend through the opening (200),
(ii) obtaining (1030) a first state (210) of an attached mode by arranging (1040) the pair of legs (170a, 170b) of the torsion spring (150) through the opening (200) of the luminaire housing (110), such that each leg of the pair of legs (170a, 170b) abuts a back side (220) of the luminaire housing (110), whereby the torsion spring (150) biases at least part of the light module (120) towards the luminaire housing (110), and
(iii) obtaining (1050) a second state (210) of an attached mode by arranging (1060) the end portion (180a, 180b) of the leg of the pair of legs (170a, 170b) to abut the back side (220) of the luminaire housing (110) at a rim (240) of the opening (200), and positioning the pair of legs (170a, 170b) of the torsion spring (150) between the luminaire housing (110) and the light module (120), whereby at least part of the light module (120) is separated from the luminaire housing (110).

14. The method according to claim 13, wherein the method further comprises:
obtaining the second state of the attached mode from the first state of the attached mode by separating the light module (120) from the luminaire housing (110) by a tool.

15. The method according to claim 13 or 14, wherein the step of obtaining the detached mode further comprises:
detaching the light module (120) from the luminaire housing (110) from one of the first state of the attached mode and the second state of the attached mode by
pushing the legs of the pair of legs (170a, 170b) towards each other, and
bringing the pair of legs (170a, 170b) through the respective opening (200).

## Patentansprüche

1. Leuchte (100), umfassend:
- ein Leuchtengehäuse (110),
- ein Leuchtmodul (120), das an dem Leuchtengehäuse anbringbar ist, und
- eine Torsionsfeder (150),
wobei die Torsionsfeder (150) eine Wicklung (160) und ein Paar von Schenkeln (170a, 170b), die sich von der Wicklung (160) weg erstrecken, umfasst,
wobei jeder Schenkel des Paares von Schenkeln (170a, 170b) einen jeweiligen Endabschnitt (180a, 180b) distal zu der Wicklung (160) umfasst,
wobei das Leuchtengehäuse (110) eine Öffnung (200) umfasst, und wobei das Leuchtmodul (120) durch die Torsionsfeder (150) über die Öffnung (200) an dem Leuchtengehäuse (110) lösbar anbringbar ist,
wobei sich, in einem getrennten Modus, die Torsionsfeder (150) nicht durch die Öffnung (200) erstreckt, wodurch mindestens ein Teil des Leuchtmoduls (120) von dem Leuchtengehäuse (110) getrennt ist,
wobei sich, in einem angebrachten Modus, die Torsionsfeder (150) teilweise durch die Öffnung (200) erstreckt,
wobei sich, in einem ersten Zustand (210) des angebrachten Modus, das Paar von Schenkeln (170a, 170b) der Torsionsfeder (150) durch die Öffnung (200) des Leuchtengehäuses (110) erstreckt und jeder Schenkel des Paares von Schenkeln (170a, 170b) an einer Rückseite (220) des Leuchtengehäuses (110) anliegt, wodurch die Torsionsfeder (150) mindestens einen Teil des Leuchtmoduls (120) zu dem Leuchtengehäuse (110) vorspannt,
wobei, in einem zweiten Zustand (230) des angebrachten Modus, der Endabschnitt jedes Schenkels des Paares von Schenkeln an der Rückseite des Leuchtengehäuses an einem Rand (240) der Öffnung anliegt und das Paar von Schenkeln (170a, 170b) der Torsionsfeder (150) zwischen dem Leuchtengehäuse (110) und dem Leuchtmodul (120) positioniert ist, wodurch mindestens ein Teil des Leuchtmoduls (120) von dem Leuchtengehäuse (110) separiert ist,
wobei die Wicklung (160) einen ersten Endabschnitt (161) und einen zweiten Endabschnitt (162) aufweist, wobei jeder des ersten Endabschnitts (161) und des zweiten Endabschnitts (162) gerade ist, und
wobei jeder Schenkel des Paares von Schenkeln (170a, 170b) einen Basisabschnitt (500), der mit einem jeweiligen einen des ersten Endabschnitts (161) und des zweiten Endabschnitts (162) verbunden ist, aufweist, wobei dadurch ein gebogener Teil (178) der Torsionsfeder (150) ausgebildet wird,
**dadurch gekennzeichnet, dass** jeder gebogene Teil (178) einen Winkel in einem Bereich von 60 bis 110 Grad aufweist.

2. Leuchte (100) nach Anspruch 1, wobei die Torsionsfeder (150) an dem Leuchtmodul (120) befestigt ist.

3. Leuchte (100) nach Anspruch 1 oder 2, wobei
ein erster Abstand, d, zwischen mindestens einem Teil des Leuchtmoduls (120) und dem Leuchtengehäuse (110), in dem ersten Zustand des angebrachten Modus, und
ein zweiter Abstand, D, zwischen mindestens einem Teil des Leuchtmoduls (120) und dem Leuchtengehäuse (110) in dem zweiten Zustand des angebrachten Modus,
D > d erfüllen.

4. Leuchte (100) nach einem der vorstehenden Ansprüche, wobei die Öffnung (200) schlitzförmig ist.

5. Leuchte (100) nach einem der vorstehenden Ansprüche, wobei sich, in der ersten Stufe des angebrachten Modus die Schenkel des Paares von Schenkeln (170a, 170b) der Torsionsfeder (150) in entgegengesetzte Richtungen entlang der Rückseite (220) des Leuchtengehäuses (110) erstrecken.

6. Leuchte (100) nach einem der vorstehenden Ansprüche, wobei sich ein erster Abschnitt (510a)jedes Schenkels des Paares von Schenkeln (170a, 170b) angrenzend an den jeweiligen Endabschnitt (180a, 180b) entlang einer ersten Achse, A, erstreckt, und der jeweilige Endabschnitt (180a, 180b) jedes Schenkels des Paares von Schenkeln (180a, 180b) hinsichtlich der ersten Achse, A, um einen Winkel, γ, geneigt ist, wobei γ > 80°.

7. Leuchte (100) nach einem der vorstehenden Ansprüche, wobei der jeweilige Endabschnitt (180a, 180b) jedes Schenkels des Paares von Schenkeln (170a, 170b) schleifenförmig ist.

8. Leuchte (100) nach einem der vorstehenden Ansprüche, wobei sich eine zweite Achse, B, von dem Basisabschnitt (500) jedes Schenkels des Paares von Schenkeln (170a, 170b), an der Wicklung (160), zu dem jeweiligen Endabschnitt (180a, 180b) erstreckt, und wobei sich ein Abschnitt (510) jedes Schenkels (170a, 170b) in eine jeweilige Richtung, Lᵢ, erstreckt, wobei die jeweilige Richtung, Lᵢ, von der zweiten Achse, B, um einen jeweiligen Winkel, αᵢ, abweicht.

9. Leuchte (100) nach einem der Ansprüche 1 bis 8, umfassend eine einzige Torsionsfeder (150).

10. Leuchte (100) nach einem der Ansprüche 1 bis 8, umfassend zwei Torsionsfedern (150a, 150b).

11. Leuchte (100) nach einem der vorstehenden Ansprüche, ferner umfassend:
einen Treiber (300), der angeordnet ist, um dem Leuchtmodul (120) elektrische Leistung zuzuführen, wobei das Leuchtengehäuse (110) einen Hohlraum (310), der angeordnet ist, um den Treiber (300) aufzunehmen, umfasst,
wobei das Leuchtmodul (120) angeordnet ist, um den Hohlraum (310) abzudecken, und
wobei, in dem getrennten Modus, der Hohlraum (310) von einer Vorderseite der Leuchte (100) zugänglich ist.

12. Leuchtenanordnung, umfassend:
mindestens eine von einer Wand und einer Decke, umfassend eine Aussparung, und
die Leuchte (100) nach einem der vorstehenden Ansprüche, die in der Aussparung angeordnet ist.

13. Verfahren (1000) für Instandhaltung der Leuchte (100) nach einem der Ansprüche 1 bis 11, wobei das Verfahren mindestens einen der folgenden Schritte umfasst:
(i) Erhalten (1010) eines getrennten Modus durch Trennen (1020) mindestens eines Teils des Leuchtmoduls (120) von dem Leuchtengehäuse (110), wodurch sich die Torsionsfeder (150) nicht durch die Öffnung (200) erstreckt,
(ii) Erhalten (1030) eines ersten Zustands (210) eines angebrachten Modus durch Anordnen (1040) des Paares von Schenkeln (170a, 170b) der Torsionsfeder (150) durch die Öffnung (200) des Leuchtengehäuses (110), derart, dass jeder Schenkel des Paares von Schenkeln (170a, 170b) an einer Rückseite (220) des Leuchtengehäuses (110) anliegt, wodurch die Torsionsfeder (150) mindestens einen Teil des Leuchtmoduls (120) zu dem Leuchtengehäuse (110) vorspannt, und
(iii) Erhalten (1050) eines zweiten Zustands (210) eines angebrachten Modus durch Anordnen (1060) des Endabschnitts (180a, 180b) des Schenkels des Paares von Schenkeln (170a, 170b), um an der Rückseite (220) des Leuchtengehäuses (110) an einem Rand (240) der Öffnung (200) anzuliegen, und Positionieren des Paares von Schenkeln (170a, 170b) der Torsionsfeder (150) zwischen dem Leuchtengehäuse (110) und dem Leuchtmodul (120), wodurch mindestens ein Teil des Leuchtmoduls (120) von dem Leuchtengehäuse (110) separiert ist.

14. Verfahren nach Anspruch 13, wobei das Verfahren ferner umfasst:
Erhalten des zweiten Zustands des angebrachten Modus von dem ersten Zustand des angebrachten Modus durch Separieren des Leuchtmoduls (120) von dem Leuchtengehäuse (110) durch ein Werkzeug.

15. Verfahren nach Anspruch 13 oder 14, wobei der Schritt des Erhaltens des getrennten Modus ferner umfasst:
Trennen des Leuchtmoduls (120) von dem Leuchtengehäuse (110) von einem des ersten Zustands des angebrachten Modus und des zweiten Zustands des angebrachten Modus durch
Drücken der Schenkel des Paares von Schenkeln (170a, 170b) aufeinander zu, und
Bringen des Paares von Schenkeln (170a, 170b) durch die jeweilige Öffnung (200).

## Revendications

1. Luminaire (100) comprenant :
- un logement de luminaire (110),
- un module de lumière (120) pouvant être fixé au logement de luminaire, et
- un ressort à torsion (150),
dans lequel le ressort à torsion (150) comprend un enroulement (160) et une paire de branches (170a, 170b) s'étendant à l'écart de l'enroulement (160),
dans lequel chaque branche de la paire de branches (170a, 170b) comprend une portion d'extrémité respective (180a, 180b) distale par rapport à l'enroulement (160),
dans lequel le logement de luminaire (110) comprend une ouverture (200), et dans lequel le module de lumière (120) peut être attaché de manière libérable au logement de luminaire (110) par le ressort à torsion (150) par l'intermédiaire de l'ouverture (200),
dans lequel, dans un mode détaché, le ressort à torsion (150) ne s'étend pas à travers l'ouverture (200), moyennant quoi au moins une partie du module de lumière (120) est détachée du logement de luminaire (110),
dans lequel, dans un mode attaché, le ressort à torsion (150) s'étend partiellement à travers l'ouverture (200),
dans lequel, dans un premier état (210) du mode attaché, la paire de branches (170a, 170b) du ressort à torsion (150) s'étend à travers l'ouverture (200) du logement de luminaire (110), et chaque branche de la paire de branches (170a, 170b) vient en butée contre un côté arrière (220) du logement de luminaire (110), moyennant quoi le ressort à torsion (150) sollicite au moins une partie du module de lumière (120) en direction du logement de luminaire (110),
dans lequel, dans un second état (230) du mode attaché, la portion d'extrémité de chaque branche de la paire de branches vient en butée contre le côté arrière du logement de luminaire au niveau d'un rebord (240) de l'ouverture, et la paire de branches (170a, 170b) du ressort à torsion (150) est positionnée entre le logement de luminaire (110) et le module de lumière (120), moyennant quoi au moins une partie du module de lumière (120) est séparée du logement de luminaire (110),
dans lequel l'enroulement (160) a une première portion d'extrémité (161) et une seconde portion d'extrémité (162), chacune de la première portion d'extrémité (161) et de la seconde portion d'extrémité (162) étant linéaire, et
dans lequel chaque branche de la paire de branches (170a, 170b) a une portion de base (500) qui est reliée à l'une respective de la première portion d'extrémité (161) et de la seconde portion d'extrémité (162), en formant de ce fait une partie cintrée (178) du ressort à torsion (150),
**caractérisé en ce que** chaque partie cintrée (178) a un angle dans une plage de 60 à 110 degrés.

2. Luminaire (100) selon la revendication 1, dans lequel le ressort à torsion (150) est fixé au module de lumière (120).

3. Luminaire (100) selon la revendication 1 ou 2, dans lequel
une première distance, d, entre au moins une partie du module de lumière (120) et le logement de luminaire (110), dans le premier état du mode attaché, et
une seconde distance, D, entre au moins une partie du module de lumière (120) et le logement de luminaire (110), dans le second état du mode attaché,
respectent D > d.

4. Luminaire (100) selon l'une quelconque des revendications précédentes, dans lequel l'ouverture (200) est en forme de fente.

5. Luminaire (100) selon l'une quelconque des revendications précédentes, dans lequel, dans le premier stade du mode attaché, les branches de la paire de branches (170a, 170b) du ressort à torsion (150) s'étendent dans des directions opposées le long du côté arrière (220) du logement de luminaire (110).

6. Luminaire (100) selon l'une quelconque des revendications précédentes, dans lequel une première portion (510a) de chaque branche de la paire de branches (170a, 170b) adjacente à la portion d'extrémité respective (180a, 180b) s'étend le long d'un premier axe, A, et la portion d'extrémité respective (180a, 180b) de chaque branche de la paire de branches (180a, 180b) est inclinée par rapport au premier axe, A, selon un angle, γ, dans lequel γ > 80°.

7. Luminaire (100) selon l'une quelconque des revendications précédentes, dans lequel la portion d'extrémité respective (180a, 180b) de chaque branche de la paire de branches (170a, 170b) est en forme de boucle.

8. Luminaire (100) selon l'une quelconque des revendications précédentes, dans lequel un second axe, B, s'étend à partir de la portion de base (500) de chaque branche de la paire de branches (170a, 170b), au niveau de l'enroulement (160), jusqu'à la portion d'extrémité respective (180a, 180b), et dans lequel une portion (510) de chaque branche (170a, 170b) s'étend dans une direction respective, Lᵢ, dans lequel la direction respective, Lᵢ, s'écarte du second axe, B, selon un angle respectif, αᵢ.

9. Luminaire (100) selon l'une quelconque des revendications 1 à 8, comprenant un unique ressort à torsion (150).

10. Luminaire (100) selon l'une quelconque des revendications 1 à 8, comprenant deux ressorts à torsion (150a, 150b).

11. Luminaire (100) selon l'une quelconque des revendications précédentes, comprenant en outre :
un circuit de pilotage (300) agencé pour alimenter en puissance électrique le module de lumière (120), dans lequel le logement de luminaire (110) comprend une cavité (310) agencée pour recevoir le circuit de pilotage (300),
dans lequel le module de lumière (120) est agencé pour couvrir la cavité (310), et
dans lequel, dans le mode détaché, la cavité (310) est accessible à partir d'un côté avant du luminaire (100).

12. Agencement de luminaire, comprenant :
au moins l'un parmi un mur et un plafond, comprenant un évidement, et
le luminaire (100) selon l'une quelconque des revendications précédentes, agencé dans l'évidement.

13. Procédé (1000) destiné à la maintenance du luminaire (100) selon l'une quelconque des revendications 1 à 11, dans lequel le procédé comprend au moins l'une des étapes suivantes :
(i) l'obtention (1010) d'un mode détaché en détachant (1020) au moins une partie du module de lumière (120) du logement de luminaire (110), moyennant quoi le ressort à torsion (150) ne s'étend pas à travers l'ouverture (200),
(ii) l'obtention (1030) d'un premier état (210) d'un mode attaché par agencement (1040) de la paire de branches (170a, 170b) du ressort à torsion (150) à travers l'ouverture (200) du logement de luminaire (110), de telle sorte que chaque branche de la paire de branches (170a, 170b) vient en butée contre un côté arrière (220) du logement de luminaire (110), moyennant quoi le ressort à torsion (150) sollicite au moins une partie du module de lumière (120) en direction du logement de luminaire (110), et
(iii) l'obtention (1050) d'un second état (210) d'un mode attaché par agencement (1060) de la portion d'extrémité (180a, 180b) de la branche de la paire de branches (170a, 170b) pour amener en butée le côté arrière (220) du logement de luminaire (110) au niveau d'un rebord (240) de l'ouverture (200), et le positionnement de la paire de branches (170a, 170b) du ressort à torsion (150) entre le logement de luminaire (110) et le module de lumière (120), moyennant quoi au moins une partie du module de lumière (120) est séparée du logement de luminaire (110).

14. Procédé selon la revendication 13, dans lequel le procédé comprend en outre :
l'obtention du second état du mode attaché à partir du premier état du mode attaché en séparant le module de lumière (120) du logement de luminaire (110) à l'aide d'un outil.

15. Procédé selon la revendication 13 ou 14, dans lequel l'étape d'obtention du mode détaché comprend en outre :
le détachement du module de lumière (120) du logement de luminaire (110) à partir de l'un du premier état du mode attaché et du second état du mode attaché
en poussant les branches de la paire de branches (170a, 170b) en direction l'une de l'autre, et
en amenant la paire de branches (170a, 170b) à travers l'ouverture (200) respective.
